# EUROPÄISCHE PATENTSCHRIFT

(11) **EP 3 625 475 B1**
(45) Veröffentlichungstag und Bekanntmachung des Hinweises auf die Patenterteilung: **10.11.2021**
(21) Anmeldenummer: 18724495.9
(22) Anmeldetag: 03.05.2018
(51) Int. Cl.: F16D 65/12

(54) **REIBRING FÜR EINE BREMSSCHEIBE, BREMSSCHEIBE SOWIE ZUGEHÖRIGES FERTIGUNGSVERFAHREN**
FRICTION RING FOR A BRAKE DISC, BRAKE DISC, AND CORRESPONDING MANUFACTURING METHOD
BAGUE DE FRICTION POUR DISQUE DE FREIN, DISQUE DE FREIN AINSI QUE PROCÉDÉ DE FABRICATION ASSOCIÉ

(30) Priorität: 19.05.2017 DE 102017208529
(43) Veröffentlichungstag der Anmeldung: 25.03.2020
(73) Patentinhaber: Continental Teves AG & Co. OHG, 60488 Frankfurt am Main (DE)
(72) Erfinder: LINHOFF, Paul, 61267 Neu-Anspach (DE); BODEN, Sven, 01217 Dresden (DE); JUNGBECKER, Johann, 55576 Badenheim (DE)
(74) Vertreter: Continental Corporation
(86) Internationale Anmeldenummer: PCT/EP2018/061272
(87) Internationale Veröffentlichungsnummer: WO 2018/210570

(56) Entgegenhaltungen:
- WO-A1-95/27589
- DE-A1- 19 749 162
- DE-A1-102009 049 875
- US-B1- 6 279 697

## Beschreibung

Die Erfindung betrifft im Wesentlichen einen Reibring für eine Bremsscheibe, wobei der Reibring zumindest in Bereich seiner Reibfläche einen PMMC Werkstoff (Particle metal matrix composite) aufweist, einschließlich eine Bremsscheibe mit einem derartigen Reibring sowie ein Oberflächenfertigungsverfahren für die Reibfläche.

In der Automobilindustrie ist man bestrebt, das Gewicht von Bremsscheiben zu reduzieren und hierfür beispielsweise statt des üblichen Graugusses leichtere und dennoch widerstandsfähige Werkstoffe einzusetzen, beispielsweise sogenannte PMMC (Particle metal matrix composite) - Werkstoffe. Bei einem PMMC Werkstoff handelt es sich im Wesentlichen um eine Verbundlegierungen, bei der in eine vergleichsweise weiche Metallmatrix beziehungsweise Trägerwerkstoff harte Partikeln wie insbesondere Karbide oder Silikate eingebettet sind. Gattungsgemäße Bremsscheiben mit Reibringen beziehungsweise Reibflächen mit oder aus einem PMMC sind grundsätzlich bekannt, beispielsweise aus DE 19505724 A1 oder DE 102011121292 A1. Bei dem darin eingesetzten PMMC handelt es sich um eine Aluminium-Matrix-Verbundlegierung Al-MMC (aluminum metal matrix composite), umgangssprachlich auch partikelverstärktes Aluminium genannt.

Es ist bekannt, dass bei Reibpaarungen aus einem Reibring und Reibbelag, bei denen der Reibring aus partikelverstärktem Aluminium (Al-MMC) besteht, die Ausbildung der Reibschicht einen maßgeblichen Einfluss auf die Leistungsfähigkeit und Belastbarkeit der Reibpaarung hat. Unmittelbar nach der Herstellung sind derartige Werkstoffe dazu jedoch nicht optimal geeignet, da die Hartpartikeln hauptsächlich unterhalb der Oberfläche eingebettet sind und ihre Rauigkeit daher zu gering ist.

Aus DE 60005655 T2 ist ein Verfahren bekannt, bei dem die Reibfläche einer Al-MMC Bremsscheibe mittels einer NaOH-Lösung geätzt wird, um die Hartpartikel freizulegen. Dies erfordert jedoch einen Arbeitsschritt mit gefährlichen ätzenden Substanzen mit entsprechenden aufwändigen Arbeitsmitteln, Sicherheitsvorkehrungen und zusätzlichen Reinigungsmaßnahmen. Zudem ist neigen derart freigelegte Karbide zum Ausbrechen aus dem Trägerwerkstoff und auch zum Festsetzen in der Oberfläche des Bremsbelags, wodurch eine Veränderung des Reibkoeffizienten der tribologischen Paarung und der Verschleiß über die Betriebsdauer unvorhersehbar schwanken können.

Es stellt sich somit die Aufgabe, eine verbesserte Bremsscheibe respektive einen verbesserten Reibring mit einer verringerten Verschleißprognose bei rationell optimierter Herstellung anzubieten.

Die Aufgabe wird durch die Merkmalskombination nach dem unabhängigen Anspruch 1 sowie durch ein Fertigungsverfahren nach Anspruch 7 gelöst. Unteransprüche zusammen mit Beschreibung und Figuren geben weitere, vorteilhafte Weiterbildungen und Ausführungsformen an. Das Wesen der Erfindung besteht im Prinzip ganz grundsätzlich darin, eine tribologisch mittels gezielter Oberflächenstrukturierung stark verbesserte, weil beschleunigte, Einlaufbetriebsphase mit Hilfe von befördertem also einseitig bzw. gegenseitig beschleunigtem Reibwerkstoffauftrag auf einen Reibring/Bremsscheibe noch effizienter als bisher von einer nachgeschalteten Normalbetriebsphase zu separieren. Insbesondere wird durch das mechanische Einbringen von einer Vielzahl quer zur Umfangsdrehrichtung des Reibrings/der Bremsscheibe verlaufenden Mikrorillen die Oberflächenstruktur der Reibfläche derart grob, raspelartig, eingestellt, dass auf diese Weise eine Einlaufrauigkeit der Reibfläche temporär gezielt erhöht ist. Dies bewirkt einen kurzzeitig stark erhöhten, gut vorhersehbaren, und sodann rasch abnehmenden Einlaufverschleiß der Bremsbeläge, um damit einen beschleunigten sowie homogeneren Einebnung- und Triboschichtauftragseffekt durch Auftrag der griffigeren Reibschicht aus Reibbelagwerkstoff auf die Reibflächen des Reibrings zu bewirken. Ist der Auftrag der Reibschicht aus Reibwerkstoff beziehungsweise die Einebnung mit der Einlaufphase erst einmal abgeschlossen, tritt während der folgenden Normalbetriebsphase nur noch ein reduzierter geringer Verschleiß an dem Reibring/der Bremsscheibe und den Bremsbelägen auf. Dabei wird der Effekt ausgenutzt, dass die Hartwerkstoffpartikel durch deren Einbettung in den aufgetragenen Reibwerkstoff, beispielsweise im Vergleich zu einer chemischen Oberflächenbehandlung, also Ätzung, weniger vorgeschädigt bzw. exponiert sind. Demzufolge erfolgt erfindungsgemäß vorteilhafterweise keine Vorschädigung des Verbunds, und die Hartpartikel verbleiben unangegriffen, ohne Schädigung, in ihrer Trägerwerkstoffmatrix eingebettet.

Insgesamt bietet erfindungsgemäß ein Reibring/eine Bremsscheibe gegenüber dem bekannten Stand der Technik folgende Vorteile:
- Schnellere und homogenere Ausbildung der Reibschicht ohne eine gezielte chemische Konditionierung der Reibfläche,
- eine höhere Leistungsfähigkeit
- eine höhere Belastbarkeit
- ein über die Betriebsdauer geringerer Gesamtverschleiß von Bremsscheibe und Bremsbelägen.
- Weil die Rebflächen konventioneller gegossener Bremsscheiben zur Entfernung der Gußhaut und/oder Einstellung des Nennmaßes meist ohnehin mechanisch bearbeitet werden müssen, entfällt bei der erfindungsgemäßen Bremsscheibe gegenüber DE 600 05 655 T2 ein zusätzlicher Arbeitsschritt sowie mit andersartigen Arbeitsmitteln und verfahren.

Nachfolgend wird die Erfindung anhand eines erfindungsgemäßen Ausführungsbeispiels genauer erläutert. Hierbei zeigt:
Fig.1 schematisch und stark vereinfacht eine Ausführungsform eines Reibrings in der Draufsicht bei der Behandlung der Reibfläche (a) sowie im Querschnitt mit einem nur angedeuteten Bremsscheibentopf (b).
Fig.2 eine stark vergrößerte nicht maßstäbliche Prinzipskizze der Reibfläche einer erfindungsgemäße Ausführungsform in Kontakt mit einem Reibbelag im Bremsbetrieb.

Ein erfindungsgemäßer Reibring 1 einer fertigen Bremsscheibe 12 für ein Kraftfahrzeug ist rotationssymmetrisch zu der Mittelachse M gestaltet. Reibring 1 ist in Umfangsdrehrichtung 8 umlaufend, sowie mehrstückig, drehfest an einem Bremsscheibentopf 13 arrangiert, oder mit diesem einstückig verbunden / erzeugt. Die Erfindung erstreckt sich gleichermaßen auf Ausgestaltungen deren Reibring 1 sowohl aus Vollwerkstoff, als auch hohl, beziehungsweise innenbelüftet mit axial beidseitig vorgesehenen Reibflächen 2 gestaltet sein darf. Denkbar ist ein Reibring 1 als seitliches Element mit einer axial lediglich einseitig vorgesehenen Reibfläche 2 zum Anbringen an ein axial versetzt arrangiertes, zentrales Ringelement zur Ausbildung der Bremsscheibe 12.

Die Reibfläche 2 ist mit einer Vielzahl von Mikrorillen 4 versehen, deren Tiefe bevorzugt im Bereich zwischen nahezu etwa 0 bis hin zu wenigen Mikrometern definiert vorgesehen ist. Durch das verwendete mechanische Bearbeitungsverfahren wird eine Texturierung (grundlegende Oberflächenstruktur der Reibfläche 2) festgelegt. Beispielsweise sind die Mikrorillen 4 in radialer Richtung schräg bzw. idealerweise orthogonal zu der Umfangsdrehrichtung 8 ausgerichtet, und werden durch ein entsprechend gerichtetes mechanisches Bearbeitungsverfahren erzeugt. Vorzugsweise erfolgt dies durch eine geschickte Anpassung von Bearbeitungsparametern bei einem zur Einstellung der Nenndicke und Nennebenheit des Reibrings 1 vorgesehenen Arbeitsschritt. Ein gesonderter, separater Prozessschritt exklusiv zum Einbringen von Mikrorillen 4 ist innerhalb der Erfindung jedoch ebenso zulässig.

Ein Reibring 1 ist je nach gewählter Zerspanungsmethode (Schnittbewegung a) vom Werkstück oder b) vom Werkzeug ausgeführt) a) drehbar angetrieben oder b) drehfest zentrisch im Arbeitsraum einer Bearbeitungsmaschine eingespannt. Beispielhaft kann Reibring 1 oder die Bremsscheibe 12 mit einem definierten Vorschub in Umfangsdrehrichtung bewegt werden. Ein Werkzeug 6 kann um seine Drehachse 5 rotieren und wird zur zu bearbeitenden Reibfläche 2 zugestellt, um deren Oberfläche zu bearbeiten (bereichsweise abzutragen). Die Bearbeitungsparameter wie insbesondere Werkzeugdrehrichtung 9, Schnittgeschwindigkeit, Vorschub, Schnittrichtung in Bezug auf die Umfangsdrehrichtung 8 beziehungsweise die Vorschubrichtung und die Werkzeugform sind dabei so zu wählen, dass die gewünschte Rauigkeit, Textur, Oberflächenspannungen, und die definierte Ausrichtung und Orientierung in Bezug auf die Umfangsdrehrichtung 8 erreicht wird. Zur Verringerung des Werkzeugverschleißes und Erzeugung einer besonders gleichmäßigen vorgesehenen Oberflächengüte mit geringen Abweichungen wird wie im gezeigten Ausführungsbeispiel der Vorschub des Reibrings 1 bevorzugt im Gleichlauf mit der Werkzeugdrehrichtung 9 eingestellt.

Als bevorzugte Fertigungsverfahren zum Einbringen der definierten Struktur kommen vorzugsweise spanabhebende Zerspanungsverfahren mit definierter Werkzeugschneide wie insbesondere Fräsen, nämlich insbesondere Wälzfräsen, beziehungsweise Drehen und/oder Drehfräsen oder aber Verfahren mit statistisch zufällig am Werkzeug versetzter Werkzeugschneide wie insbesondere Schleifen oder Honen in Betracht. In Hinblick auf eine gegebene, strukturelle Brüchigkeit bzw. Sprödigkeit von Hartstoff bzw. Hartstoffpartikel kann es von Vorteil sein, durch eine beispielsweise halbierte, also graduell reduzierte bzw. geregelt reduzierte Zustellgeschwindigkeit bzw. durch halbierte, also graduell reduziert geregelte, Vorschubgeschwindigkeit und/oder in Kombination mit beispielsweise verdoppelt verstärktem Kühlschmiermitteldurchfluss (l/min) fertigungsbedingt möglichst keine zusätzlichen oder allenfalls sehr geringfügige Schub- bzw. Druckspannungsanteile in die Werkstückoberfläche zusätzlich einzutragen.

Im gezeigten Ausführungsbeispiel ist als Werkzeug 6 beispielhaft ein Wälzfräser mit Lage und Orientierung wie zum Wälzfräsen (Evolventenform) des Werkstücks arrangiert, wie dies sonst eigentlich nur zur Herstellung von schrägverzahnten Zahnrädern bekannt ist. Die durch den Schnitteingriff der Zähne 7 erzeugte Restrauheit bzw. Oberflächenstruktur liegt im Mikrometerbereich und entspricht der gewünschten Einlaufrauigkeit.

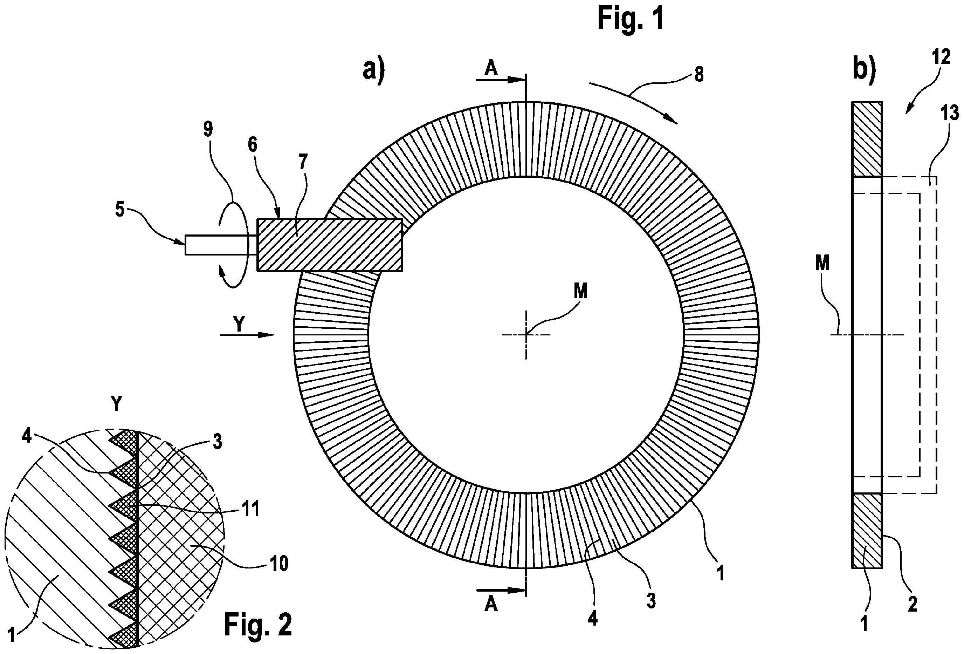

Drehen sich das Werkzeug 6 und der Reibring 1 in auf einander abgestimmte Richtungen sowie mit auf einander abgestimmter, respektive synchroner, Drehzahl, so erzeugt dies auf der bearbeiteten Reibfläche 2 gerichtet nach radial außen verlaufende Rauhigkeitsberge und -täler, wie in der Fig.2 angedeutet. Idealerweise wir ein im Querschnitt gesehen sägezahnähnliches Profil angestrebt. Die Spitzen 3 der Rauhigkeitsberge wirken auf einen angelegten Bremsbelag 10 im Bremsbetrieb wie zerspanende Schneidkanten und verursachen während einer Einlaufphase einen zeitlich beschränkten, zielgerichtet erhöht beabsichtigten Einlauf-Belagverschleiß, so dass zeitlich befristet verstärkt Abriebpartikel von dem Reibwerkstoff des Bremsbelags 10 abgetragen werden, um diesen Werkstoff auf die mikrooberflächlichen Spalten bzw. Täler des Reibrings aufzutragen bzw. zu verschweißen. Der Abrieb 11 lagert sich dabei sukzessive in den Tälern der Mikrorillen 4 ab und füllt diese auf bzw. aus. Also erfolgt durch Werkstoffübertrag im Mikrobereich ein allmählicher Einebnungseffekt, und man überdeckt nach der verstrichenen Einlaufphase auch die Spitzen 3 des Reibrings 1 mit dem Werkstoff des Bremsbelags 10. Mit Abschluss der Einlaufphase ist die Paarung unter passendem Auftragsaufbau derselben Reibwerkstoffschicht auf die Reibfläche 2 des Reibrings 1 abgeschlossen, und der Verschleiß der Bremsbeläge 10 bzw. des Reibrings 1/der Bremsscheibe 12 nimmt in der nachfolgenden Normalbetriebsphase dauerhaft stark ab.

### Bezugszeichenliste

- 1: Reibring
- 2: Reibfläche
- 3: Spitze
- 4: Mikrorillen
- 5: Drehachse
- 6: Werkzeug
- 7: Schneidezähne
- 8: Umfangsdrehrichtung
- 9: Werkzeugdrehrichtung
- 10: Bremsbelag
- 11: Abrieb
- 12: Bremsscheibe
- 13: Bremsscheibentopf
- M: Mittelachse

## Patentansprüche

1. Reibring (1) für eine Bremsscheibe (12) mit wenigstes einer Reibfläche (2), die zum Zusammenwirken mit einem Bremsbelag (10) vorgesehen ist, wobei der Reibring (1) einen PMMC Werkstoff (Particle metal matrix composite) , wie insbesondere einen Al-MMC Werkstoff, zumindest im Bereich der Reibfläche (2) aufweist, oder aus diesem vollständig besteht, **dadurch gekennzeichnet, dass** die Reibfläche (2) eine Vielzahl von Mikrorillen (4) aufweist, welche sich in Bezug auf eine Umfangsdrehrichtung (8) des Reibrings (1) nichttangential angewinkelt zur Umfangsdrehrichtung, also zumindest mit einer Komponente, radial gerichtet, erstrecken.

2. Reibring (1) nach Anspruch 1 **dadurch gekennzeichnet, dass** die Mikrorillen (4) im Wesentlichen orthogonal zur Umfangsdrehrichtung (8) angeordnet sind.

3. Reibring (1) nach Anspruch 1 **dadurch gekennzeichnet, dass** die Mikrorillen (4) durch ein mechanisches Abtrage oder Umformverfahren in die Reibfläche (2) eingebracht sind.

4. Reibring (1) nach Anspruch 1 **dadurch gekennzeichnet, dass** die Mikrorillen (4) in Umfangsrichtung derart nahe beieinander angeordnet sind, dass im Querschnitt ein im Wesentlichen sägezahnähnliches Profil mit unmittelbar benachbarten Rauhigkeitsbergen und Rauhigkeitstälern gebildet ist.

5. Reibring (1) nach Anspruch 1, **dadurch gekennzeichnet, dass** eine Tiefe der Mikrorillen (4) bevorzugt in einem Bereich zwischen minimal nahezu etwa 0 Mikrometer bis maximal wenigen Mikrometern definiert vorliegt.

6. Bremsscheibe (12) für eine Bremsanlage mit wenigstens einem Reibring (1) nach einem der Ansprüche 1 bis 5.

7. Verfahren zur Herstellung eines Reibrings (1) mit Mikrorillen (4) nach einem oder mehreren der Ansprüche 1 bis 5 **dadurch gekennzeichnet, dass** in einem Verfahrensschritt der Reibring (1) mit einen definierten Vorschub in Umfangsdrehrichtung (8) versetzt wird und die Reibfläche (2) von einem in eine Werkzeugdrehrichtung (9) rotierenden Werkzeug (6) bearbeitet wird, so dass damit die Mikrorillen (4) in die Reibfläche (2) eingebracht werden.

8. Verfahren nach Anspruch 7 **dadurch gekennzeichnet, dass** der Vorschub des Reibrings (1) und die Werkzeugdrehrichtung (9) im Wesentlichen im Gleichlauf erfolgen.

9. Verfahren nach Anspruch 7 **dadurch gekennzeichnet, dass** das Werkzeug (6) ein Fräswerkzeug, insbesondere ein Wälzfräser ist.

10. Verfahren nach Anspruch 7 **dadurch gekennzeichnet, dass** das Werkzeug (6) ein Schleifwerkzeug ist.

11. Verfahren nach Anspruch 7 **dadurch gekennzeichnet, dass** zugleich mit dem Einbringen der Mikrorillen (4) ein definiertes Dickennennmaß des Reibrings (1) durch Spanabhebung eingestellt wird.

## Claims

1. Friction ring (1) for a brake disc (12) with at least one friction surface (2), which is intended for interacting with a brake lining (10), wherein the friction ring (1) comprises a PMMC material (particle metal matrix composite), such as in particular an Al-MMC material, at least in the region of the friction surface (2), or consists thereof completely, **characterized in that** the friction surface (2) has a multiplicity of microgrooves (4), which extend in a radially directed manner with respect to a circumferential direction of rotation (8) of the friction ring (1), non-tangentially angled to the circumferential direction of rotation, that is to say at least with one component.

2. Friction ring (1) according to Claim 1, **characterized in that** the microgrooves (4) are arranged essentially orthogonally to the circumferential direction of rotation (8).

3. Friction ring (1) according to Claim 1, **characterized in that** the microgrooves (4) are introduced into the friction surface (2) by a mechanical removing or forming method.

4. Friction ring (1) according to Claim 1, **characterized in that** the microgrooves (4) are arranged close to one another in the circumferential direction in such a way that in cross section an essentially sawtooth-like profile with directly adjacent roughness peaks and roughness valleys is formed.

5. Friction ring (1) according to Claim 1, **characterized in that** a depth of the microgrooves (4) is preferably provided in a defined manner in a range between at minimum almost around 0 to at maximum a few micrometres.

6. Brake disc (12) for a brake system with at least one friction ring (1) according to one of Claims 1 to 5.

7. Method for producing a friction ring (1) with microgrooves (4) according to one or more of Claims 1 to 5, **characterized in that**, in one method step, the friction ring (1) is offset with a defined feed in the circumferential direction of rotation (8) and the friction surface (2) is machined by a tool (6) rotating in a direction of tool rotation (9), such that the microgrooves (4) are thereby introduced into the friction surface (2).

8. Method according to Claim 7, **characterized in that** the feed of the friction ring (1) and the direction of tool rotation (9) take place essentially in synchronism.

9. Method according to Claim 7, **characterized in that** the tool (6) is a milling tool, in particular a hob.

10. Method according to Claim 7, **characterized in that** the tool (6) is a grinding tool.

11. Method according to Claim 7, **characterized in that**, at the same time as the introduction of the microgrooves (4), a defined nominal thickness of the friction ring (1) is set by chip removal.

## Revendications

1. Bague de friction (1) destinée à un disque de frein (12) et comprenant au moins une surface de friction (2) destinée à coopérer avec une garniture de frein (10), la bague de friction (1) comportant un matériau PMMC (Particle Metal Matrix Composite), tel que notamment un matériau Al-MMC, au moins dans la zone de la surface de friction (2), ou étant entièrement en ce matériau, **caractérisée en ce que** la surface de friction (2) comporte une pluralité de micro-rainures (4) qui s'étendent par rapport à un sens de rotation circonférentiel (8) de la bague de friction (1) angulairement et non-tangentiellement au sens de rotation circonférentiel, c'est-à-dire avec au moins une composante dirigée radialement.

2. Bague de friction (1) selon la revendication 1, **caractérisée en ce que** les micro-rainures (4) sont disposées sensiblement orthogonalement au sens de rotation circonférentiel (8).

3. Bague de friction (1) selon la revendication 1, **caractérisée en ce que** les micro-rainures (4) sont ménagées dans la surface de friction (2) par un procédé d'enlèvement ou de formage mécanique.

4. Bague de friction (1) selon la revendication 1, **caractérisée en ce que** les micro-rainures (4) sont disposées les unes près des autres dans la direction circonférentielle de manière à former en coupe transversale un profil sensiblement en dents de scie comportant des pics de rugosité et des creux de rugosité immédiatement adjacents.

5. Bague de friction (1) selon la revendication 1, **caractérisée en ce qu'**une profondeur des micro-rainures (4) est de préférence définie dans une gamme comprise entre un minimum d'environ 0 micromètre et un maximum de quelques micromètres.

6. Disque de frein (12) destiné à un système de freinage comportant au moins une bague de friction (1) selon l'une des revendications 1 à 5.

7. Procédé de fabrication d'une bague de friction (1) comportant des micro-rainures (4) selon une ou plusieurs des revendications 1 à 5, **caractérisé en ce que**, dans une étape de procédé, la bague de friction (1) est décalée d'une avance définie dans le sens de rotation circonférentiel (8) et la surface de friction (2) est traitée par un outil (6), tournant dans un sens de rotation d'outil (9), de manière à ménager ainsi les micro-rainures (4) dans la surface de friction (2).

8. Procédé selon la revendication 7, **caractérisé en ce que** l'avance de la bague de friction (1) et le sens de rotation d'outil (9) sont effectués de manière sensiblement synchronisée.

9. Procédé selon la revendication 7, **caractérisé en ce que** l'outil (6) est un outil de fraisage, notamment une fraise mère développante.

10. Procédé selon la revendication 7, **caractérisé en ce que** l'outil (6) est un outil de meulage.

11. Procédé selon la revendication 7, **caractérisé en ce qu'**une épaisseur nominale définie de la bague de friction (1) est réglée par enlèvement de copeaux en même temps que les micro-rainures (4) sont ménagées.
